# EUROPEAN PATENT APPLICATION

(11) **EP 4 568 102 A1**
(43) Date of publication of application: **11.06.2025**
(21) Application number: 23214190.3
(22) Date of filing: 05.12.2023
(51) Int. Cl.: H02P 27/14, H02M 7/483, H02M 7/49

(54) **MULTILEVEL INVERTER AND ASSOCIATED METHOD**

(71) Applicant: GE Energy Power Conversion Technology Limited, Rugby, Warwickshire CV21 1BD (GB)
(72) Inventor: PERMUY, Alfred, 91140 VILLEBON-SUR-YVETTE (FR)
(74) Representative: Casalonga

(57) **Abstract**

A Multilevel inverter (10) for converting an DC voltage into an AC voltage or an AC voltage into a DC voltage, including at least one phase (P) is proposed.

The inverter comprises:
- a set (16) of capacitors (C1, C2, C3) including N capacitors, N being an integer greater than or equal to 3;
- the inverter having N+1 levels,
- a balancing device (17) configured to balance the voltage on the terminals of each of the capacitors of the set of capacitors,
- a module (18) for switching the input DC voltage and being able to convert the input DC voltage into the respective phase of the output AC voltage.

## Description

The present invention concerns multilevel inverters and methods for controlling a multilevel inverter.

Generally, a multilevel inverter supplies a load from a DC voltage source or supplies a DC from an AC source.

The load may have more phases, each phase of the load being connected to an output terminal of the multilevel inverter.

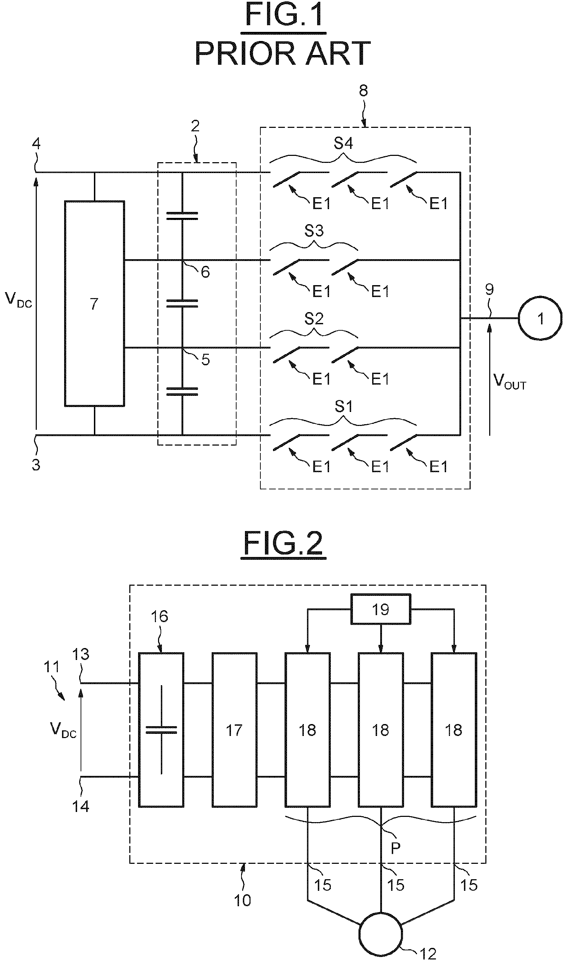

Figure 1 illustrates an example of a multilevel inverter supplying one phase of a load 1.

The inverter comprises a set of capacitors 2 comprising three capacitors extending between two input terminals 3, 4 and connected together in series through two intermediate points 5, 6.

The inverter further comprises a balancing device 7 known from the document US2013/114320 balancing the voltage in each of the intermediate points 5, 6 of the set of capacitors 2 regardless of the voltage and of the current delivered on the two input terminals 3, 4, and a switching module 8.

The multilevel inverter delivers four voltage levels.

The balancing device 7 and the switching module 8 are connected to the input terminals 3, 4 and both intermediate points 5, 6.

The switching module 8 delivers an AC voltage on an output terminal 9 of the inverter.

The voltage between the two input terminals 3, 4 is equal to V_{DC}.

A first input terminal 3 is used as a voltage reference. The voltage at a first intermediate point 5 is equal to V_{DC}/2, the voltage at the second intermediate point 6 is equal to 2V_{DC}/3, and the voltage at the second intermediate point 6 is equal to V_{DC}.

The switching module 8 comprises a first set S1 of switches connecting the first input terminal 3 to the output terminal 9, a second set S2 of switches connecting the first intermediate point 5 to the output terminal 9, a third set S3 of switches connecting the second intermediate point 6 to the output terminal 9, and a fourth set S4 of switches connecting the second input terminal 4 to the output terminal 9.

When the first set S1 of switches is closed, the first input terminal 3 is connected to the output terminal 9. The second, third and fourth set S2, S3, S4 are open.

The voltage through the fourth set S4 of open switches is equal to V_{DC}, the voltage through the third set S3 of open switches is equal to 2V_{DC}/3, and the voltage through the second set S2 of open switches is equal to V_{DC}/3.

When the fourth set S4 of switches is closed, the second input terminal 4 is connected to the output terminal 9. The first, second and fourth set S1, S2, S3 are open.

The voltage through the first set S1 of open switches is equal to V_{DC}, the voltage through the second set S2 of open switches is equal to 2V_{DC}/3, and the voltage through the third set S3 of open switches is equal to V_{DC}.

The first and fourth set S1, S4 are designed to endure the voltage V_{DC}, and the second and third sets S2, S3 are designed to endure the voltage 2V_{DC}/3.

Furthermore, the second and third sets S2, S3 have to withstand an inversion of the voltage at their ends.

When the first set S1 is closed, the end of the second and third sets S2, S3 connected to the output terminal 9 has a potential lower than the potential of the end of the said sets connected to the intermediate points 5, 6.

When the fourth set S4 is closed, the end of the second and third sets S2, S3 connected to the output terminal 9 has a potential greater than the potential of the end of the said sets connected to the intermediate points 5, 6.

The first and fourth sets S1, S4 comprise unidirectional switches E1, and the second and third sets S2, S3 comprise bidirectional switches E2 to withstand the voltage inversion.

Each bidirectional switch E2 may comprise two unidirectional switches E1 in a back-to-back configuration.

Each switch E1 may endure a voltage V_{DC}/3 so that the first and fourth set S1, S4 comprise each three switches E1 and the second and third sets S2, S3 comprise each four switches E1.

The four-level inverter comprises fourteen switches.

For multilevel inverters delivering more than four levels, the number of switches E1 increases dramatically so that the encumbrance of each switching module 8 increases and the controlling of the switches E1 is more complex.

It is therefore proposed to remedy the disadvantage related to switching modules for multilevel inverters known from the prior art.

In view of the foregoing the invention proposes a multilevel inverter for converting an input DC voltage into an output AC voltage or an AC voltage into a DC voltage, including at least one phase.

The multilevel inverter comprises:
- a positive input terminal, a negative input terminal, and an output terminal for the at least one phase;
- a set of capacitors including N capacitors connected in series between both input terminals and connected together through intermediate points, two extreme capacitors of the N capacitors being directly connected to one of the two input terminals, N being an integer so that N=Qⁿ⁺¹-1, Q being an integer equal or greater than two, and n being an integer equal or greater than one;
- the inverter having N+1 levels,
- a balancing device connected between both input terminals and the intermediate points, and configured to balance the voltage on the terminals of each of the capacitors of the set of capacitors regardless of the DC voltage and the current delivered on the positive and negative input terminals and regardless of the AC voltage and current delivered by the phase,
- for the output terminal, a module for switching the DC voltage and being able to convert the DC voltage on the positive and negative input terminals into the AC voltage on the output terminal, or for switching the AC voltage on the output terminal and being able to convert the AC voltage into the DC voltage on the positive and negative input terminals, each switching module comprising:
   o input connections, each input connection being connected to one of the two input terminals or to one of the intermediate points, and
   o supply lines, each supply lines connecting an input connection to the respective output terminal and comprising a plurality of switches connected together in series.

A set of switches of the plurality of switches of a first supply line connected to a first input connection is shared with a second supply line connected to a second input connection so that a first current flowing from the first input connection to the respective output terminal and a second current flowing from the second input connection to the respective output terminal flow through the set of switches of the plurality of switches.

Advantageously, the multilevel inverter further comprises a command circuit configured for switching the switches of each switching module to minimize the voltage at the ends of each switch when the said switch is open.

Advantageously, Q is equal to two, N+1 being further the number of input connections and the number of supply lines, each switching module comprising (N+1)*log(N+1)/log(2) switches, each supply lines comprising N switches.

Preferably, n is equal to 1 so that N is equal to three, the set of capacitors including a first, a second and a third capacitors, a first end of the first capacitor being connected to a first end of the second capacitor through a first intermediate point, a first end of the third capacitor being connected to the second capacitor through a second intermediate point, the first input connection being connected to the second end of the first capacitor, the second input connection being connected to the first intermediate point, a third input connection of a third supply line being connected to the second intermediate point, and a fourth input connection of a fourth supply line being connected to the second end of the third capacitor,
- the first supply line comprising a first, second and a third switches connected in series so that a first end of the first switch is connected to the first input connection, a second end of the first switch is connected to a first end of the second switch, a second end of the second switch is connected to a first end of the third switch, and a second end of the third switch is connected to the output terminal,
- the second supply line comprising a fourth switch, the second and the third switches connected in series, so that a first end of the fourth switch is connected to the first intermediate point, a second end of the fourth switch is connected to the first end of the second switch,
- the third supply line comprising a fifth switch, a sixth switch and a seventh switch connected in series, so that a first end of the fifth switch is connected to the second intermediate point, a second end of the fifth switch is connected to a first end of the sixth switch, a second end of the sixth switch is connected to a first end of the seventh switch, and a second end of the seventh switch is connected to the output terminal, and
- the fourth supply line comprising an eighth switch, the sixth and seventh switches connected in series so that a first end of the eighth switch is connected to the fourth input connection, a second end of the eighth switch is connected to the first end of the sixth switch.

Advantageously, the second end of the first capacitor is connected to the positive input terminal and the second end of the third capacitor is connected to the negative input terminal, the multilevel power inverter being a four-level inverter.

Preferably, the multilevel inverter further comprises a plurality of balancing resistors, a first balancing resistor connecting the first and the second ends of the first switch, a second balancing resistor connecting the first and the second ends of the second switch, a third balancing resistor connecting the first and the second ends of the third switch, a fourth balancing resistor connecting the first and the second ends of the sixth switch, a fifth balancing resistor connecting the first and the second ends of the seventh switch, and a sixth balancing resistor connecting the first and the second ends of the eighth switch.

Preferably, each switch comprises a unidirectional switch including at least a diode and at least a gate turn off thyristor, the anode of the gate turn off thyristor being connected to the cathode of the diode and the cathode of the a gate turn off thyristor being connected to the anode of the diode, the gate of the gate turn off thyristor being connected to the command circuit.

Advantageously, each switch comprises a unidirectional switch including at least a diode and at least a field effect transistor, wherein the drain of the transistor is connected to the cathode of the diode and the source of the transistor is connected to the anode of the diode, the gate of the transistor being connected to the command circuit.

Preferably Q is greater or equal than tree, N+1 being further the number of input connections and the number of supply lines, some switches of the module comprising unidirectional switches and bidirectional switches.

Advantageously, the balancing device comprises two switching modules and an inductor, each input connection of the two switching modules of the balancing device being connected to one of the two input terminals or to one of the intermediate points, the output terminal of each switching module of the balancing device being connected to an end of the inductor.

Another object of the invention relates to a method for controlling a multilevel inverter converting an DC voltage into an AC voltage or an AC voltage into a DC voltage, including at least one phase.

The multilevel inverter comprises:
- a positive input terminal, a negative input terminal, and an output terminal for the at least one phase;
- a set of capacitors including N capacitors connected in series between both input terminals and connected together through intermediate points, two extreme capacitors of the N capacitors being directly connected to one of the two input terminals, N being an integer so that N=Qⁿ⁺¹-1, Q being an integer equal or greater than two, and n being an integer equal or greater than one;
- the inverter having N+1 levels,
- a balancing device connected between both input terminals and the intermediate points, and configured to balance the voltage on the terminals of each of the capacitors of the set of capacitors regardless of the DC voltage and the current delivered on the positive and negative input terminals and regardless of the AC voltage and current delivered by the phase,
- for the output terminal, a module for switching the DC voltage and being able to convert the DC voltage on the positive and negative input terminals into AC voltage on the output terminal, or for switching the AC voltage on the output terminal and being able to convert the AC voltage into the DC voltage on the positive and negative input terminals, each switching module comprising:
   o input connections, each input connection being connected to one of the two input terminals, or to one of the intermediate points, and
   o supply lines, each supply lines connecting an input connection to the output terminal and comprising a plurality of switches connected together in series.

The method comprises controlling a set of switches of the plurality of switches of a first supply line connected to a first input connection shared with a second supply line connected to a second input connection so that a first current flowing from the first input connection to the respective output terminal and a second current flowing from the second input connection to the respective output terminal flow through the set of switches of the plurality of switches.

Advantageously, Q is equal to two, N+1 being further the number of input connections and the number of supply lines, each switching module comprising log(N+1)/log(2)*(N+1) switches, each supply lines comprising N switches.

Preferably, n is equal to 1 so that N is equal to three, the set of capacitors including a first, a second and a third capacitors, a first end of the first capacitor being connected to a first end of the second capacitor through a first intermediate point, a first end of the third capacitor being connected to the second capacitor through a second intermediate point, the first input connection being connected to the second end of the first capacitor, the second input connection being connected to the first intermediate point, a third input connection of a third supply line being connected to the second intermediate point, and a fourth input connection of a fourth supply line being connected to the second end of the third capacitor, the first supply line comprising a first, second and a third switches, the second supply line comprising a fourth switch, the second and the third switches, the third supply line comprising a fifth switch, a sixth switch and a seventh switch, and the fourth supply line comprising a eighth switch, the sixth and seventh switches, the method comprising:
- closing the fourth, sixth, seventh and eight switches and opening the first, second, third and fifth switches to deliver a first level on the output terminal,
- closing the fourth, fifth, sixth and seventh switches and opening the first, second, third and eighth switches to deliver a second level on the output terminal,
- closing the second, third, fourth and fifth switches, and opening the first, sixth, seventh and eighth switches to deliver a third level on the output terminal, and
- closing the first, second, third and fifth switches, and opening the fourth, sixth, seventh and eighth switches to deliver a fourth level on the output terminal.

Advantageously, the method further comprises:
- opening the eighth switch to switch from the first level to the second level,
- opening the sixth and seven switches to switch from the second level to the third level, and
- opening the first switch to switch from the third level to the fourth level.

Preferably, the second end of the first capacitor is connected to the positive input terminal and the second end of the third capacitor is connected to the negative input terminal, the multilevel power inverter being a four level power inverter.

Other characteristics and advantages of the invention will emerge on reading the following description of embodiments of the invention, provided solely by way of non-limiting examples and with reference to the drawings in which:
Figure 1 illustrates schematically an example of a multilevel inverter known from the prior art,
Figure 2 illustrates schematically a first example of a multilevel inverter according to the invention,
Figure 3 illustrates schematically a second example of the multilevel inverter according to the invention,
Figure 4 illustrates schematically a first example of unidirectional switches according to the invention,
Figure 5 illustrates schematically a second example of unidirectional switches according to the invention,
Figure 6 illustrates schematically a third example of the multilevel inverter according to the invention, and
Figure 7 illustrates schematically a fourth example of the multilevel inverter according to the invention.
Figure 8 illustrates schematically a first example of bidirectional switches according to the invention,
Figure 9 illustrates schematically a second example of bidirectional switches according to the invention, and
Figure 10 illustrates schematically another example of a balancing device according to the invention.

Figure 2 illustrates schematically a first example of a multilevel inverter 10.

The multilevel inverter 10 is connected to a continuous DC voltage source 11, and is able to convert a DC voltage into an AC voltage, and includes P phases connected to an electric machine 12.

The multilevel inverter 10 is further able to convert an AC voltage into a DC voltage.

The multilevel inverter 10 is a voltage inverter with N+1 levels, wherein N is an integer.

The multilevel inverter 10 comprises a positive input terminal 13, a negative input terminal 14, and an output terminal 15 for each of the P phases. P is an integer greater than or equal to 1. In the exemplary embodiment of figure 2, P is equal to 3.

The conversion system 10 comprises a set 16 of capacitors, a device 17 for balancing the voltage on the terminals of the capacitors of the set 16, P modules 18 for switching the input DC voltage, and a command circuit 19 for controlling each switching module 18.

The DC voltage source 11 comprises an input DC voltage V_{DC} between the input terminals 13, 14 of the inverter 10.

The set 16 of capacitors includes N capacitors connected in series between both input terminals 13, 14 and connected together through intermediate points.

The integer N is such that N=Qⁿ⁺¹-1, Q being an integer equal or greater than two, and n being an integer equal or greater than one.

The two extreme capacitors of the N capacitors are directly connected to one of the two input terminals 13, 14.

The electric machine 12 is for example a three-phase electric motor. The electric motor 12 is for example a synchronous motor. Alternatively, the motor 12 is an asynchronous motor.

The set of capacitors 26, the balancing device 17 and the P switching modules 18 are electrically connected in parallel on each other between the input terminals 13, 14. Both input terminals 13, 14 are common to the set 16 of capacitors, to the balancing device 17 and to the P switching modules 28. Each switching module 28 is also connected to a respective output terminal 15.

The balancing device 17 is further connected to each end of the N capacitors.

The balancing device 17 balances the voltage on the terminals of each of the capacitors of the set 16 of capacitors regardless of the input DC voltage and the current delivered on the positive and negative input terminals 13, 14 and regardless of the AC voltage and current delivered by the phases P as explained in the document US 2013/114320.

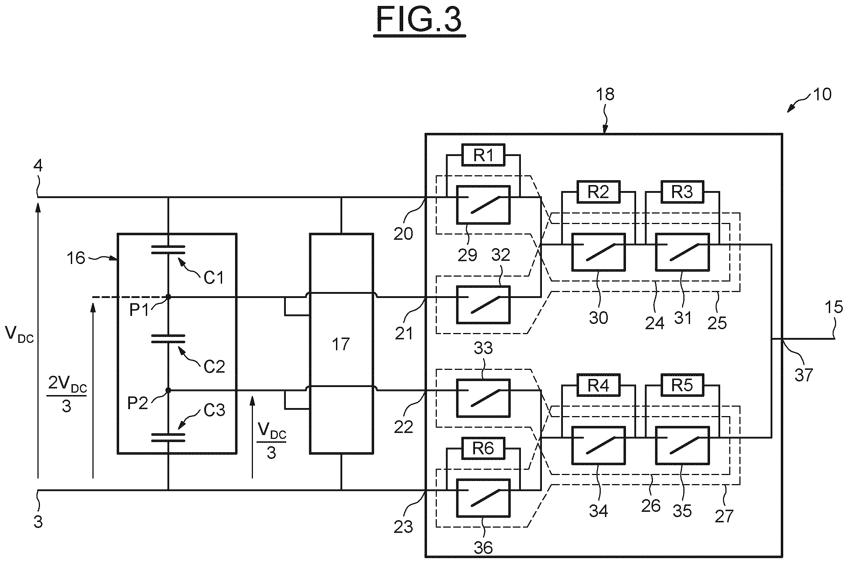

Figure 3 illustrates schematically a second example of the inverter 10 comprising a first example of switching modules 18.

For clarity reason, only one switching module 18 is represented.

When Q is equal to two, the switching module 18 comprise N+1 input connections, N+1 number of supply lines, and (N+1)*log(N+1)/log(2) switches. Each supply line of the N+1 supply lines comprises (N+1)*log(N+1)/log(2) switches.

For clarity reason, it is assumed that n is equal to one so that N is equal to tree, the set 16 of capacitors including three capacitors C1, C2, C3.

A first end of the first capacitor C1 is connected to a first end of the second capacitor C2 through a first intermediate point P1.

A first end of the third capacitor C3 is connected to the second capacitor C2 through a second intermediate point P2.

The second end of the first capacitor C1 is connected to the positive input terminal 13 and the second end of the third capacitor C3 is connected to the negative input terminal 14.

The multilevel power inverter 10 is a four-level inverter.

The balancing device 17 further comprises a first connection connected to the first intermediate point P1 and a second connection connected to the second intermediate point P2. The switching module 18 comprises the N+1 input connections 20, 21, 22, 23 and the N+1 supply lines 24, 25, 26, 27.

The switching module 18 comprises the log(N+1)/log(2)*(N+1) switches 29, 30, 31, 32, 33, 34, 35, 36, each supply line 24, 25, 26, 27 comprising N switches.

The switching module 18 further comprises an output connection 37 connected to the output terminal 15.

A first supply line 24 connects a first input connection 20 connected to the second end of the first capacitor C1 to the output connection 37 and comprises a first switch 29, a second switch 30 and a third switch 31 connected together in series so that series so that a first end of the first switch 29 is connected to the first input connection 20, a second end of the first switch 29 is connected to a first end of the second switch 30, a second end of the second switch 30 is connected to a first end of the third switch 31, and a second end of the third switch 31 is connected to the output connection 37.

A second supply line 25 connects a second input connection 21 connected to the first intermediate point P1 to the output connection 37 and comprises the second switch 30, the third switch 31 and a fourth switch 32 connected together in series so that a first end of the fourth switch 32 is connected to the first intermediate point P1, a second end of the fourth switch 32 is connected to the first end of the second switch 30.

A third supply line 26 connects a third input connection 22 connected to the second intermediate point P2 to the output connection 37 and comprises a fifth switch 33, a sixth switch 34 and a seventh switch 35 connected together in series so that a first end of the fifth switch 33 is connected to the second intermediate point P2, a second end of the fifth switch 33 is connected to a first end of the sixth switch 34, a second end of the sixth switch 34 is connected to a first end of the seventh switch 35, and a second end of the seventh switch 35 is connected to the output connection 37.

A fourth supply line 27 connects the fourth input connection 23 connected to the second end of the third capacitor C3 to the output connection 37 and comprises the sixth switch 34, the seventh switch 35 and an eighth switch 36 connected together in series so that so that a first end of the eighth switch 36 is connected to the fourth input connection 23, a second end of the eighth switch 36 is connected to the first end of the sixth switch 34.

The first example of switching module 18 comprises a switching unit formed by the four supply lines 24, 25, 26, 27.

The balancing device 17 balances the voltage on the terminals of each of the capacitors C1, C2, C3 of the set 16 so that the voltage at the first input connection 20 is equal to V_{DC}, the voltage at the second input connection 21 is equal to 2V_{DC}/3, the voltage at the third input connection 22 is equal to V_{DC}/3, and the voltage at the fourth input connection 23 is equal to nil.

The switches 29, 30, 31, 32, 33, 34, 35, 36 may be identical and may be designed to endure at least a voltage equal to V_{DC}/3 between both ends of each switch when the said switch is open, each switch 29, 30, 31, 32, 33, 34, 35, 36 may comprise a unidirectional switch.

The second switch 30 and the third switch 31 of the first supply line 24 are shared with the second supply line 25 so that a first current flowing from the first input connection 20 to the output terminal 15 and a second current flowing from the second input connection 21 to the output terminal 15 flow through the second switch 30 and the third switch 31.

Similarly, the sixth switch 34 and the seventh switch 35 of the third supply line 26 are shared with the fourth supply line 27 so that a third current flowing from the third input connection 22 to the output terminal 15 and a fourth current flowing from the fourth input connection 23 to the output terminal 15 flow through the sixth switch 34 and the seventh switch 35.

As the switches of the first and second sets of switches are shared respectively with the first and second supply lines 24, 25, and the third and fourth supply lines 26, 27, the number of switches of the switching module 18 is reduced compared to a switching module known from the prior art.

In this case, the switching module 18 comprises eight switches whereas a switching module known from the prior art comprising four input connections comprises ten switches.

The switching module 18 may further comprise a plurality of balancing resistors R1, R2, R3, R4, R5, R6, the balancing resistors R1, R2, R3, R4, R5, R6 having for example a same predetermined value.

The balancing resistors R1, R2, R3, R4, R5, R6 permit to limit the voltage between the first and second ends of the switches 29, 30, 31, 32, 33, 34, 35, 36 at a voltage equal to the voltage between both ends of a capacitor C1, C2, C3 equal to V_{DC}/3 when the said switches are opened.

A first balancing resistor R1 connects the first and the second ends of the first switch 29, a second balancing resistor R2 connects the first and the second ends of the second switch 30, a third balancing resistor R3 connects the first and the second ends of the third switch 31, a fourth balancing resistor R4 connects the first and the second ends of the sixth switch 34, a fifth balancing resistor R5 connects the first and the second ends of the seventh switch 35, and the sixth balancing resistor R6 connects the first and the second ends of the eighth switch 36.

The switches 29, 30, 31, 32, 33, 34, 35, 36 may be unidirectional switches.

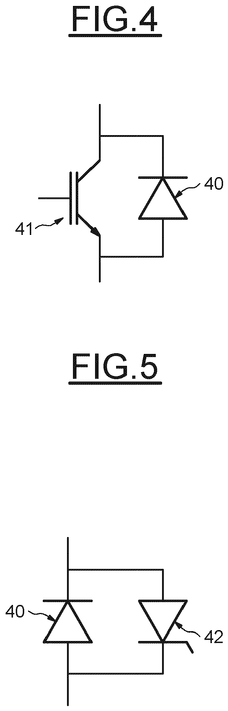

Figure 4 illustrates schematically a first example of a unidirectional switch.
the unidirectional switch includes a diode 40 and a field effect transistor 41.

The field effect transistor 41 may be an insulated gate bipolar transistor IGBT or another type of field effect transistor.

The gate of the transistor 41 is connected to the command circuit 19, the drain of the transistor 41 is connected to the cathode of the diode 40 and the source of the transistor 41 is connected to the anode of the diode 40.

The transistor 41 is designed to support a voltage at least equal to V_{DC}/3.

Each switch may comprise a plurality of transistors 41 in series so that the drain of one transistor is connected to the source of another transistor, the number of transistors 41 being determined so that the set of transistors 41 in series supports a voltage at least equal to V_{DC}/3.

Figure 5 illustrates schematically a second example of the unidirectional switch.

The unidirectional switch includes the diode 40 and a gate turn off thyristor 42.

The gate of the gate turn off thyristor 42 is connected to the command circuit 19, the anode of the gate turn off thyristor 42 is connected to the cathode of the diode 40, and the cathode of the gate turn off thyristor 42 is connected to the anode of the diode 40.

The gate turn off thyristor 42 is designed to support a voltage at least equal to V_{DC}/3.

Each switch may comprise a plurality of gate turn off thyristors 42 in series so that the anode of one thyristor is connected to the cathode of another thyristor, the number of thyristors 113 being determined so that the set of thyristors 42 in series supports a voltage at least equal to V_{DC}/3.

The anode of the diode 40 of the first switch 29 is connected to the first input connection 20, the anode of the diode 40 of the fourth switch 32 is connected to the second input connection 21, the anode of the diode 40 of the fifth switch 33 is connected to the third input connection 22, and the anode of the diode 40 of the eighth switch 36 is connected to the fourth input connection 23.

The anode of the diode 40 of the second switch 30 and the anode of the diode 40 of the fourth switch 31 are respectively connected to the cathode of the diode 40 of the first switch 29 and the cathode of the diode 40 of the second switch 30.

The anode of the diode 40 of the sixth switch 34 and the anode of the diode 40 of the seventh switch 31 are respectively connected to the cathode of the diode 40 of the fifth switch 33 and the cathode of the diode 40 of the sixth switch 34.

The command circuit 19 controls the switches 29, 30, 31, 32, 33, 34, 35, 36 of the switching module 18 and may control the switches 29, 30, 31, 32, 33, 34, 35, 36 of the switching module 18 to minimize the voltage at the ends of each switch 29, 30, 31, 32, 33, 34, 35, 36 when the said switch is open as described in the following.

It is assumed that the switches 29, 30, 31, 32, 33, 34, 35, 36 of the switching module 18 are open so that no current flows through each switch 29, 30, 31, 32, 33, 34, 35, 36.

To deliver the first level on the output terminal 15, the command circuit 19 closes the fourth, sixth, seventh and eight switches 32, 34, 35, 36, and opens the first, second, third and fifth switches 29, 30, 31, 33.

The first level is equal to nil.

As the fourth switch 32 is closed, the voltage between the output terminal 15 and a connection between the first, second and third switches 29, 30, 32 is equal to 2V_{DC}/3. The set of second and third switches 30, 31 endure a voltage equal to 2V_{DC}/3 between the output terminal 15 and the first switch 29.

To deliver the second level on the output terminal 15, the command circuit 19 closes the fourth, fifth, sixth and seventh switches 32, 33, 35, 36, and opens the first, second, third and eighth switches 29, 30, 31, 36.

The second level is equal to V_{DC}/3.

As the fourth switch 32 is closed, the voltage between the output terminal 15 and a connection between the first, second and third switches 29, 30, 32 is equal to V_{DC}/3. The set of second and third switches 30, 31 endure a voltage equal to V_{DC}/3 between the output terminal 15 and the first switch 29.

To deliver the third level on the output terminal 15, the command circuit 19 closes the second, third, fourth and fifth switches 30, 31, 32, 33, and opens the first, sixth, seventh and eighth switches 29, 34, 35, 36.

The third level is equal to 2V_{DC}/3.

As the fifth switch 33 is closed, the voltage between the output terminal 15 and a connection between the fifth, sixth and eighth switches 33, 34, 36 is equal to V_{DC}/3. The set of fifth and sixth switches 34, 35 endure a voltage equal to V_{DC}/3 between the output terminal 15 and the fifth switch 33.

To deliver the fourth level on the output terminal 15, the command circuit 19 closes the first, second, third and fifth switches 29, 30, 31, 33, and opens the fourth, sixth, seventh and eighth switches 33, 34, 35, 36.

The third level is equal to V_{DC}.

As the fifth switch 33 is closed, the voltage between the output terminal 15 and a connection between the fifth, sixth and eighth switches 33, 34, 36 is equal to 2V_{DC}/3. The set of fifth and sixth switches 34, 35 endure a voltage equal to 2V_{DC}/3 between the output terminal 15 and the fifth switch 33.

Each switch of the switching module 18 endures between its ends a voltage equal to at most V_{DC}/3 when the said switch is open in order to minimize the said voltage preserving the said switch from a defect.

To switch from the first level to the second level, the control command 19 opens the eighth switch.

To switch from the second level to the third level, the control command 19 opens the sixth and seven switches.

To switch from the third level to the fourth level, the control command 19 opens the first switch.

In order to maintain the voltage between both ends of each switch to at most V_{DC}/3, the control circuit 19 controls the switches of the switching module 18 in ascending or descending order of the levels.

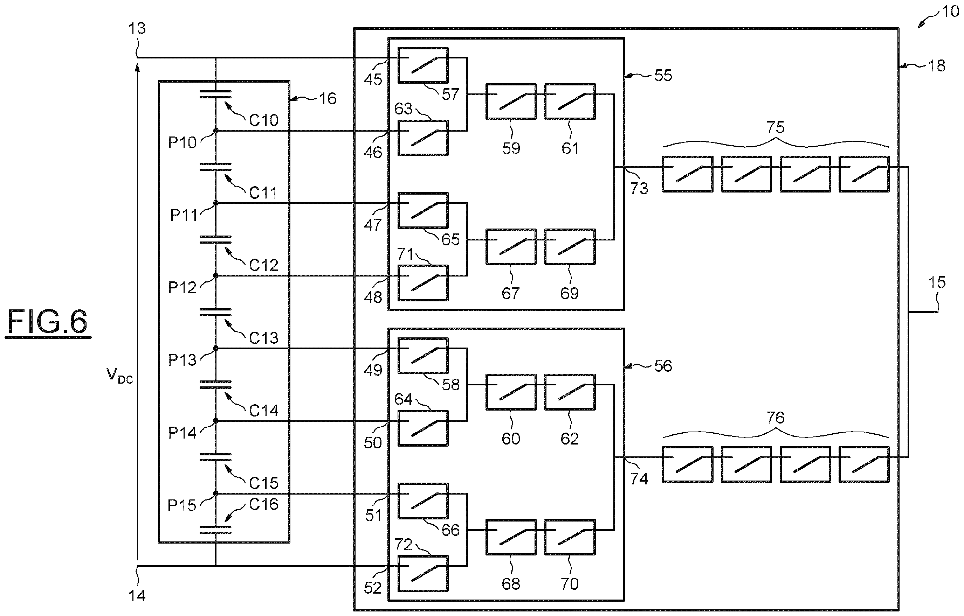

Figure 6 illustrates schematically a third example of the power inverter 10 comprising a second example of the switching module 18.

It is assumed that Q is equal to two and n is equal to two, N being equal to seven.

Of course, n may be greater than two.

The set 16 comprises seven capacitors C10, C11, C12, C13, C14, C15, C16.

The switching module 18 comprise eight input connections 45, 46, 47, 48, 49, 50, 51, 52, eight supply lines, twenty-two switches 57 to 72, each supply line comprising seven switches.

A first end of a first capacitor C10 is connected to a first end of a second capacitor C11 through a first intermediate point P10.

A first end of a third capacitor C12 is connected to the second end of the second capacitor C11 through a second intermediate point P11.

A first end of a fourth capacitor C13 is connected to the second end of the third capacitor C12 through a third intermediate point P12.

A first end of a fifth capacitor C14 is connected to the second end of the fourth capacitor C13 through a fourth intermediate point P13.

A first end of a sixth capacitor C15 is connected to the second end of the fifth capacitor C14 through a fifth intermediate point P14.

A first end of the seventh capacitor C16 is connected to the second end of the sixth capacitor C15 through a sixth intermediate point P15.

The second end of the first capacitor C10 is connected to the positive input terminal 13 and the second end of the seventh capacitor C16 is connected to the negative input terminal 14.

The multilevel power inverter 10 comprising the switching module 18 and the set 16 comprising the seven capacitors is an eight-level inverter.

The switching module 18 comprises a first and second switching unit 55, 56 identical to the switching unit described above comprising the first switch 57, 58, the second switch 59, 60, the third switch 61, 62, the fourth switch 63, 64, the fifth switch 65, 66, the sixth switch 67, 68, the seven switch 69, 70 and the eighth switch 71, 72 forming the supply lines.

The switching units 55, 56 further comprise the output connection 73, 74.

The first supply line of the first switching unit 55 comprises the switches 57, 59, 61 and extends between a first input connection 45 connected to the second end of the first capacitor C10 and the output connection 73.

The second supply line of the first switching unit 55 comprises the switches 63, 59, 61 and extends between a second input connection 46 connected to the first intermediate point P10.

The third supply line of the first switching unit 55 comprises the switches 65, 67, 69 and extends between a third input connection 47 connected to the second intermediate point P11 and the output connection 73.

The fourth supply line of the first switching unit 55 comprises the switches 71, 67, 69 and extends between a fourth input connection 48 connected to the third intermediate point P12 and the output connection 73.

The first supply line of the second switching unit 56 comprises the switches 58, 60, 62 and extends between a fifth input connection 49 connected to the fourth intermediate point P13 and the output connection 74.

The second supply line of the second switching unit 56 comprises the switches 64, 60, 62 and extends between a sixth input connection 50 connected to the fifth intermediate point P14 and the output connection 74.

The third supply line of the second switching unit 56 comprises the switches 66, 68, 70 and extends between a seventh input connection 51 connected to the sixth intermediate point P15 and the output connection 74.

The fourth supply line of the second switching unit 56 comprises the switches 72, 68, 70 and extends between the eighth input connection 52 connected to the second end of the seventh capacitor C16 and the output connection 74.

The switching module 18 further comprises two sets 75, 76 of four switches connected together in series.

A first set 75 connects the output connection 73 of the first switching unit 55 to the output terminal 15, and the second set 76 connects the output connection 74 of the first switching unit 56 to the output terminal 15.

The balancing device 17 (not represented on figure 6) balances the voltage on the terminals of each of the capacitors C11, C12, C13, C14, C15, C16 of the set 16 so that the voltage at the first input connection 45 is equal to V_{DC}, the voltage at the second input connection 46 is equal to 6V_{DC}/7, the voltage at the third input connection 47 is equal to 5V_{DC}/7, the voltage at the fourth input connection 48 is equal to 4V_{DC}/7, the voltage at the fifth input connection 49 is equal to 3V_{DC}/7, the voltage at the sixth input connection 50 is equal to 2V_{DC}/7 the voltage at the seventh input connection 51 is equal to V_{DC}/7, and the voltage at the eighth input connection 52 is equal to nil.

The switches 57, 58, 59, 60, 61, 62, 63, 64, 65, 66, 67, 68, 69, 70, 71, 72 and the switches of the first and second sets 75, 76 may be identical and may be designed to endure at least a voltage equal to V_{DC}/7 at the ends of each switch when the said switch is open.

The set of capacitors may have more than seven capacitors so that the switching module 18 may have more than two switching units.

The switches of the switching module 18 are controlled by the command circuit 19 to minimize the voltage at the ends of each switch when the said switch is open.

The man skilled in the art would accommodate the control of the switches of the second example of the switching module 18 from the first example of the power inverter illustrated on figure 3 to minimize the voltage at the ends of each switch when the said switch is open.

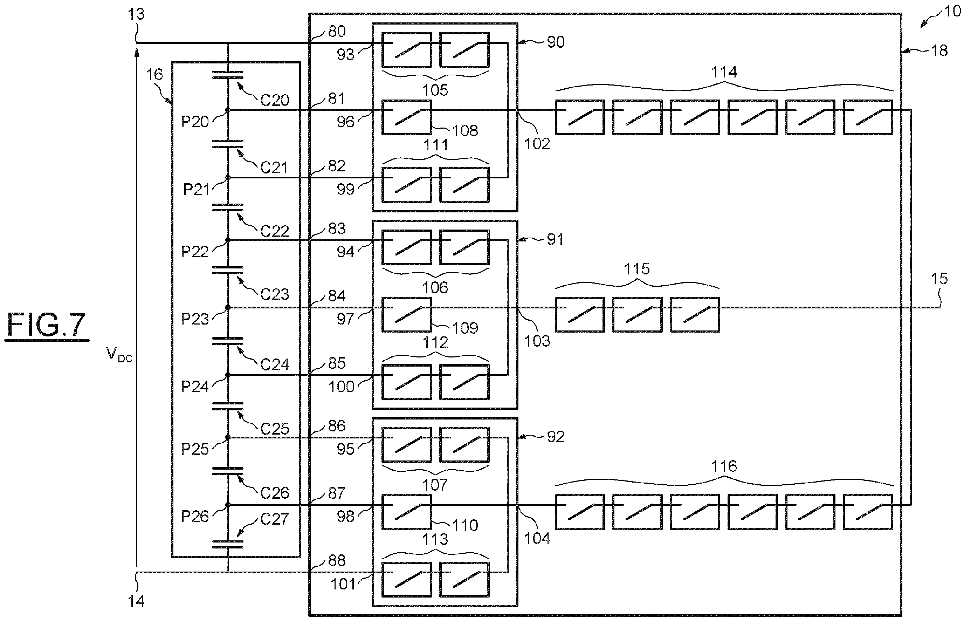

The first switching unit 55 and the second switching unit 56 may comprise the balancing resistors R1, R2, R3, R4, R5, R6, R7, R8 (not represented on figure 6) as defined above.Figure 7 illustrates schematically a fourth example of the power inverter 10 comprising a third example of the switching module 18.

In this example, the integer Q is equal to tree and for clarity reason n is equal to 1.

N is equal to eight.

Of course, Q may be greater than tree.

In variant, n may be greater than one.

The set 16 comprises eight capacitors C20, C21, C22, C23, C24, C25, C26, C27.

The switching module 18 comprise nine input connections 80 to 88 and nine supply lines.

A first end of a first capacitor C20 is connected to a first end of a second capacitor C21 through a first intermediate point P20.

A first end of a third capacitor C22 is connected to the second end of the second capacitor C21 through a second intermediate point P21.

A first end of a fourth capacitor C23 is connected to the second end of the third capacitor C22 through a third intermediate point P22.

A first end of a fifth capacitor C24 is connected to the second end of the fourth capacitor C23 through a fourth intermediate point P23.

A first end of a sixth capacitor C25 is connected to the second end of the fifth capacitor C24 through a fifth intermediate point P24.

A first end of the seventh capacitor C26 is connected to the second end of the sixth capacitor C25 through a sixth intermediate point P25.

A first end of the eighth capacitor C27 is connected to the second end of the seventh capacitor C26 through a seven intermediate point P26.

The second end of the first capacitor C20 is connected to the positive input terminal 13 and the second end of the eighth capacitor C27 is connected to the negative input terminal 14.

The multilevel power inverter 10 comprising the switching module 18 and the set 16 comprising the eight capacitors is a nine-level inverter.

The switching module 18 comprises a first input connection 80 connected to the second end of the first capacitor C20, a second input connection 81 connected to the first intermediate point P20, a third input connection 82 connected to the second intermediate point P21, a fourth input connection 83 connected to the third intermediate point P22, a fifth input connection 84 connected to the fourth intermediate point P23, a sixth input connection 85 connected to the fifth intermediate point P24, a seventh input connection 86 connected to the sixth intermediate point P25, an eighth input connection 87 connected to the seventh intermediate point P26, and a ninth input connection 88 connected to the second end of the eight capacitor C27.

The switching module 18 further comprises three switching units 90, 91, 92.

Each switching unit 90, 91, 92 comprises a first input 93, 94, 95, a second input 96, 97, 98, a third input 99, 100, 101, and an output 102, 103, 104.

The first input 93 of the first switching unit 90 is connected to the first input connection 80, the second input 96 of the first switching unit 90 is connected to the second input connection 81, and the third input 99 of the first switching unit 90 is connected to the third input connection 82.

The first input 94 of the second switching unit 91 is connected to the fourth input connection 83, the second input 97 of the second switching unit 91 is connected to the fifth input connection 84, and the third input 100 of the second switching unit 91 is connected to the sixth input connection 85.

The first input 95 of the third switching unit 92 is connected to the seventh input connection 86, the second input 98 of the third switching unit 92 is connected to the eighth input connection 87, and the third input 101 of the third switching unit 92 is connected to the ninth input connection 88.

Each switching unit 90, 91, 92 comprises a first set 105, 106, 107 of two switches connected together in series and extending between the first input 93, 94, 95 and the output 102, 103, 104, a switch 108, 109, 110 connecting the second input 96, 97, 98 to the output 102, 103, 104, and a second set 111, 112, 113 of two switches connected together in series and extending between the third input 99, 100, 101 and the output 102, 103, 104.

The switching module 18 further comprises a third set 114 of switches comprising six switches connected together in series and connecting the output 102 of the first switching unit 90 to the output terminal 15, a fourth set 115 of switches comprising tree switches connected together in series and connecting the output 103 of the second switching unit 91 to the output terminal 15, and a fifth set 116 of switches comprising six switches connected together in series and connecting the output 104 of the third switching unit 104 to the output terminal 15.

The switching module 18 comprises a first supply line extending between the first input connection 80 and the output terminal 15, and comprising the first set 105 of the first switching unit 90 and the third set 114.

The switching module 18 comprises a second supply line extending between the second input connection 81 and the output terminal 15, and comprising the switch 108 of the first switching unit 90 and the third set 114.

The switching module 18 comprises a third supply line extending between the third input connection 82 and the output terminal 15, and comprising the second set 111 of the first switching unit 90 and the third set 114.

The switching module 18 comprises a fourth supply line extending between the fourth input connection 83 and the output terminal 15, and comprising the first set 106 of the second switching unit 91 and the fourth set 115.

The switching module 18 comprises a fifth supply line extending between the fifth input connection 84 and the output terminal 15, and comprising the switch 109 of the second switching unit 91 and the fourth set 115.

The switching module 18 comprises a sixth supply line extending between the sixth input connection 85 and the output terminal 15, and comprising the second set 112 of the second switching unit 91 and the fourth set 115.

The switching module 18 comprises a seventh supply line extending between the seventh input connection 86 and the output terminal 15, and comprising the first set 107 of the third switching unit 92 and the fifth set 116.

The switching module 18 comprises an eighth supply line extending between the eighth input connection 87 and the output terminal 15, and comprising the switch 110 of the third switching unit 92 and the fifth set 116.

The switching module 18 comprises a ninth supply line extending between the ninth input connection 88 and the output terminal 15, and comprising the second set 113 of the third switching unit 92 and the fifth set 116.

The third, fourth and fifth sets 114, 115, 116 of switches are shared by many supply lines reducing the number of switches of the switching module 18.

The switches of the switching module 18 are controlled by the command circuit 19 as explained in the following to minimize the voltage between both ends of each switch when the said switch is open.

The balancing device 17 (not represented on figure 7) balances the voltage on the terminals of each of the capacitors C20, C21, C22, C23, C24, C25, C26, C27 of the set 16 so that the voltage at the first input connection 80 is equal to V_{DC}, the voltage at the second input connection 81 is equal to 7V_{DC}/8, the voltage at the third input connection 82 is equal to 3V_{DC}/4, the voltage at the fourth input connection 83 is equal to 5V_{DC}/8, the voltage at the fifth input connection 84 is equal to V_{DC}/2, the voltage at the sixth input connection 85 is equal to 3V_{DC}/8 the voltage at the seventh input connection 86 is equal to V_{DC}/4, the voltage at the eighth input connection 87 is equal to V_{DC}/8, and the voltage at the ninth input connection 88 is equal nil.

The switches 108, 109, 110 of the switching units 90, 91, 92, the switches of the first and second sets 105, 106, 107, 111, 112, 113 of the switching units 90, 91, 92, and the switches of the third, fourth and fifth sets 114, 115, 116 may be designed to endure at least a voltage equal to V_{DC}/8 at the ends of each switch when the said switch is open.

For each switching unit 90, 91, 92, the switches of the switching unit which are adjacent to switches of the said switching unit included in two supply lines comprise bidirectional switches and the other switches of the said switching unit comprise unidirectional switches for example as described on figures 4 and 5.

The switches of the first sets 105, 106, 107 and second sets 111, 112, 113 of switches of the switching units 90, 91, 92 each comprises a unidirectional switch as described on figures 4 and 5.

The switches 108, 109, 110 of the switching units 90, 91, 92, each comprises a bidirectional switch.

The switches of the switching module 18 which are adjacent to switches of the said switching module included in two supply lines comprise bidirectional switches and the other switches of the said switching module 18 comprise unidirectional switches for example as described on figures 4 and 5.

The switches of the third set 114 and fifth set 116 of switches of the switching module 18 each comprises a unidirectional switch as described on figures 4 and 5.

The switches of the fourth set 115 of switches of the switching module 18 each comprises a bidirectional switch.

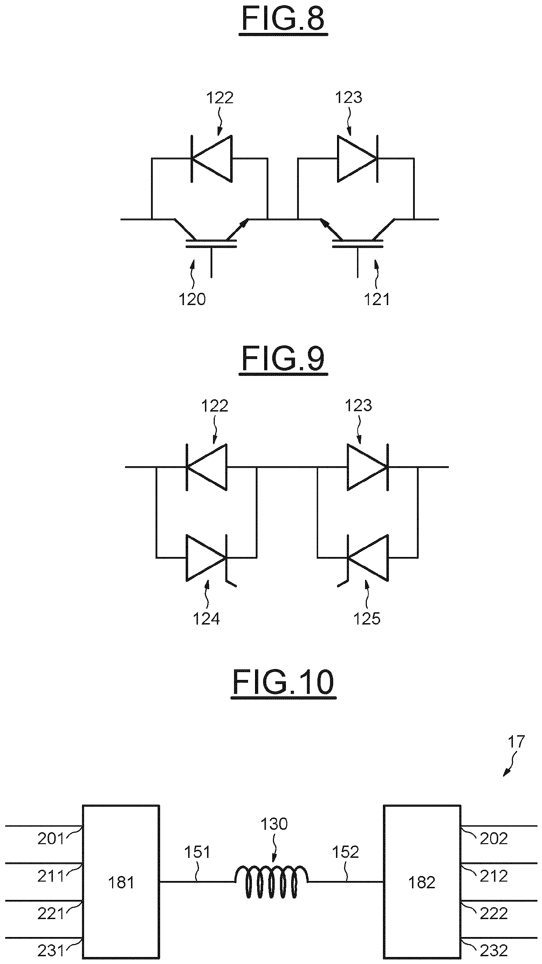

Figure 8 illustrates schematically a first example of a bidirectional switch.

The bidirectional switch comprises a first field effect transistor 120, a second field effect transistor 121, a first diode 122, and a second diode 123.

The field effect transistors 120, 121 may be an insulated gate bipolar transistor IGBT or another type of field effect transistor.

The gate of the first and second field transistors 120, 121 is connected to the command circuit 19.

The source of the first field effect transistor 120 is connected to the source of the second field effect transistor 121.

The drain of the first field transistor 120 is connected to the cathode of the first diode 122 and the source of the first transistor 120 is connected to the anode of the first diode 122.

The drain of the second field transistor 121 is connected to the cathode of the second diode 123 and the source of the second transistor 121 is connected to the anode of the second diode 123.

The transistors 120, 121 are designed to support a voltage at least equal to V_{DC}/3.

Figure 9 illustrates schematically a second example of a bidirectional switch.

The bidirectional switch comprises the first diode 122, the second diode 123, a first gate turn off thyristor 124, and a second gate turn off thyristor 125.

The gate of the first and second gate turn off thyristors 124, 125 is connected to the command circuit 19.

The cathode of the first gate turn off thyristor 124 is connected to the cathode of the second gate turn off thyristor 125.

The cathode of the first diode 122 is connected to the anode of the first gate turn off thyristor 124 and the cathode of the second diode 123 is connected to the anode of the second gate turn off thyristor 125.

The anode of the first diode 122 and the anode of the second diode 123 are connected to the cathode of the first and second gate turn off thyristors 124, 125.

The gate turn off thyristors 124, 125 are designed to support a voltage at least equal to V_{DC}/3.

Turning back to figure 7, to deliver the first level on the output terminal 15, the command circuit 19 closes the second set 111, 112, 113 of the first, second and third switching units 90, 91, 92, closes the fifth set 116, and opens the first set 105, 106, 107 of the switching units 90, 91, 92, the switch 108, 109, 110 of the switching units 90, 91, 92, and the third and fourth sets 114, 115.

The first level is equal to nil.

To deliver the second level on the output terminal 15, the command circuit 19 closes the second set 111, 112 of the first and second switching units 90, 91, the switch 110 of the third switching unit 92, and the fifth set 116.

The command circuit 19 further opens the first set 105, 106, 107 of the switching units 90, 91, 92, the switch 108, 109 of the first and second switching units 90, 91, the second set 113 of the third switching unit 92, the third and fourth sets 114, 115.

The second level is equal to V_{DC}/8.

To deliver the third level on the output terminal 15, the command circuit 19 closes the second set 111, 112 of the first and second switching units 90, 91, the first set 107 of the third switching unit 92, and the fifth set 116.

The command circuit 19 further opens the first set 105, 106 of the first and second switching units 90, 91, the switch 108, 109, 110 of the switching units 90, 91, 92, the second set 113 of the third switching unit 92, and the third and fourth sets 114, 115.

The third level is equal to V_{DC}/4.

To deliver the fourth level on the output terminal 15, the command circuit 19 closes the second set 111, 112 of the first and second switching units 90, 91, the first set 107 of the third switching unit 92, and the fourth set 115.

The command circuit 19 further opens the first set 105, 106 of the first and second switching units 90, 91, the switch 108, 109, 110 of the switching units 90, 91, 92, the second set 113 of the third switching unit 92, and the third and fifth sets 114, 116.

The fourth level is equal to 3V_{DC}/8.

To deliver the fifth level on the output terminal 15, the command circuit 19 closes the second set 111 of the first second switching unit 90, the switch 109 of the second switching unit 91, the first set 107 of the third switching unit 92, and the fourth set 115.

The command circuit 19 further opens the first set 105, 106 of the first and second switching units 90, 91, the switches 108, 110 of the first and third switching units 90, 92, the second set 112, 113 of the second and third switching units 91, 92, and the third and fifth sets 114, 116.

The fifth level is equal to V_{DC}/2.

To deliver the sixth level on the output terminal 15, the command circuit 19 closes the second set 111 of the first second switching unit 90, the first set 106, 107 of the second and third switching units 91, 92 and the fourth set 115.

The command circuit 19 further opens the first set 105 of the first switching unit 90, the switches 108, 109, 110 of the switching units 90, 91, 92 and the second set 112, 113 of the second and third switching units 91, 92, and the third and fifth sets 114, 116

The sixth level is equal to 5V_{DC}/8.

To deliver the seventh level on the output terminal 15, the command circuit 19 closes the second set 111 of the first second switching unit 90, the first set 106, 107 of the second and third switching units 91, 92 and the third set 114.

The command circuit 19 further opens the first set 105 of the first switching unit 90, the switches 108, 109, 110 of the switching units 90, 91, 92 and the second set 112, 113 of the second and third switching units 91, 92, and the fourth and fifth sets 115, 116.

The seventh level is equal to 3V_{DC}/4.

To deliver the eighth level on the output terminal 15, the command circuit 19 closes the switch 108 of the first second switching unit 90, the first set 106, 107 of the second and third switching units 91, 92 and the third set 114.

The command circuit 19 further opens the first set 105 of the first switching unit 90, the switches 109, 110 of the second and third switching units 91, 92 and the second set 112, 113 of the second and third switching units 91, 92, and the fourth and fifth sets 115, 116.

The seventh level is equal to 7V_{DC}/8.

To deliver the ninth level on the output terminal 15, the command circuit 19 closes the first sets 105, 106, 107 of the switching units 90, 91, 92, and the third set 114.

The command circuit 19 further opens the switches 108, 109, 110 of the switching units 90, 91, 92, the second set 111, 112, 113 of the switching units 90, 91, 92, and the fourth and fifth sets 115, 116.

The ninth level is equal to V_{DC}.

The voltage between the output terminal 15 and the output 102 of the first switching unit 90 is at most equal to 3V_{DC}/4 (first level), the voltage between the output terminal 15 and the output 103 of the second switching unit 91 is at most equal to 3V_{DC}/8 (first and ninth levels), and the voltage between the output terminal 15 and the output 104 of the third switching unit 92 is at most equal to 3V_{DC}/4 (ninth level).

The third set 114 and the fifth set 116 endure a voltage equal to at most 3 V_{DC}/4, and the fourth set 115 endures a voltage equal to at most 3V_{DC}/8.

To switch from the first level to the second level, the control command 19 opens the second set 113 of the third switching unit 92.

To switch from the second level to the third level, the control command 19 opens the switch 110 of the third switching unit 92.

To switch from the third level to the fourth level, the control command 19 opens the fifth set 116.

To switch from the fourth level to the fifth level, the control command 19 opens the second set 112 of the second switching unit 91.

To switch from the fifth level to the sixth level, the control command 19 opens the switch 109 of the second switching unit 91.

To switch from the sixth level to the seventh level, the control command 19 opens the fourth set 115.

To switch from the seventh level to the eighth level, the control command 19 opens the second set 111 of the first switching unit 90.

To switch from the eighth level to the ninth level, the control command 19 opens the switch 108 of the first switching unit 90.

In order to maintain the voltage between both ends of each switch of the third, fourth and fifth sets 114, 115, 116, the control circuit 19 controls the switches of the switching module 18 in ascending or descending order of the levels.

The balancing device 17 may comprises two switching modules 18 and an inductor.

Each input connection of the two switching modules 18 of the balancing device is connected to one of the two input terminals or to one of the intermediate points.

The output terminal 15 of each switching module 18 of the balancing device is connected to an end of the inductor.

Figure 10 illustrates schematically another example of the balancing device 17 comprises a first switching module 181, a second switching module 182, and an inductor 130.

For clarity reason, the example of the balancing device 17 is designed for the second example of the multilevel inverter illustrated on figure 3.

The first switching module 181 and the second switching module 182 have the same architecture as the switching module 18 described in figure 3.

The first switching module 181 comprises the first input connection 201, the second input connection 211, the third input connection 221, the fourth input connection 231, and the output terminal 151 connected to a first end of the inductor 130.

The second switching module 182 comprises the first input connection 202, the second input connection 212, the third input connection 222, the fourth input connection 232, and the output terminal 152 connected to a second end of the inductor 130.

The first input connections 201, 202 of the first and second switching modules 181, 182 are connected to the second end of the first capacitor C1.

The second input connections 211, 212 of the first and second switching modules 181, 182 are connected to the first intermediate point P1.

The third input connections 221, 222 of the first and second switching modules 181, 182 are connected to the second end of the second intermediate point P2.

The fourth input connections 201, 202 of the first and second switching modules 181, 182 are connected to the second end of the third capacitor C3.

## Claims

1. Multilevel inverter (10) for converting a DC voltage into an AC voltage or an AC voltage into a DC voltage, including at least one phase (P), comprising:
- a positive input terminal (13), a negative input terminal (14), and an output terminal (15) for the at least one phase;
- a set (16) of capacitors (C1, C2, C3, C10, C11, C12, C13, C14, C15, C16, C20, C21, C22, C23, C24, C25, C26, C27) including N capacitors connected in series between both input terminals and connected together through intermediate points (P1, P2, P10, P11, P12, P13, P14, P15, P20, P21, P22, P23, P24, P25, P26), two extreme capacitors of the N capacitors being directly connected to one of the two input terminals, N being an integer so that N=Qⁿ⁺¹-1, Q being an integer equal or greater than two, and n being an integer equal or greater than one;
- the inverter having N+1 levels,
- a balancing device (17) connected between both input terminals and the intermediate points, and configured to balance the voltage on the terminals of each of the capacitors of the set of capacitors regardless of the DC voltage and the current delivered on the positive and negative input terminals and regardless of the AC voltage and current delivered by the phase,
- for the output terminal (15), a module (18) for switching the DC voltage and being able to convert the DC voltage on the positive and negative input terminals into the AC voltage on the output terminal , or for switching the AC voltage on the output terminal and being able to convert the AC voltage into the DC voltage on the positive and negative input terminals, each switching module comprising:
∘ input connections (20, 21, 22, 23, 45, 46, 47, 48, 49, 50, 51, 52, 80, 81, 82, 83, 84, 85, 86, 87, 88), each input connection being connected to one of the two input terminals or to one of the intermediate points, and
o supply lines (24, 25, 26, 27), each supply lines connecting an input connection to the output terminal and comprising a plurality of switches connected together in series,
**characterized in that** a set of switches (30, 31, 59, 61, 75, 114) of the plurality of switches of a first supply line (24) connected to a first input connection (20, 45, 80) is shared at least with a second supply line (25) connected to a second input connection (21, 46, 81) so that a first current flowing from the first input connection to the respective output terminal and a second current flowing from the second input connection to the respective output terminal flow through the set of switches of the plurality of switches.

2. Multilevel inverter according to claim 1, further comprising a command circuit (19) configured for switching the switches of each switching module (18) to minimize the voltage at the ends of each switch when the said switch is open.

3. Multilevel inverter according to claim 1 or 2, wherein Q is equal to two, N+1 being further the number of input connections (20, 21, 22, 23, 45, 46, 47, 48, 49, 50, 51, 52) and the number of supply lines (24, 25, 26, 27), each switching module (18) comprising (N+1)*log(N+1)/log(2) switches, each supply lines comprising N switches.

4. Multilevel inverter according to any one of claim 3, wherein n is equal to 1 so that N is equal to three, the set (16) of capacitors including a first, a second and a third capacitors (C1, C2, C3), a first end of the first capacitor (C1) being connected to a first end of the second capacitor (C2) through a first intermediate point (P1), a first end of the third capacitor (C3) being connected to the second capacitor through a second intermediate point (P2), the first input connection (20) being connected to the second end of the first capacitor, the second input connection (21) being connected to the first intermediate point, a third input connection (22) of a third supply line being connected to the second intermediate point, and a fourth input connection (23) of a fourth supply line being connected to the second end of the third capacitor,
- the first supply line (24) comprising a first, second and a third switches (29, 30, 31) connected in series so that a first end of the first switch (29) is connected to the first input connection (20), a second end of the first switch (29) is connected to a first end of the second switch (30), a second end of the second switch (30) is connected to a first end of the third switch (31), and a second end of the third switch (31) is connected to the output terminal (15),
- the second supply line (25) comprising a fourth switch, the second and the third switches (32, 30, 31) connected in series, so that a first end of the fourth switch (32) is connected to the first intermediate point (P1), a second end of the fourth switch (32) is connected to the first end of the second switch (30),
- the third supply line (26) comprising a fifth switch, a sixth switch and a seventh switch (33, 34, 35) connected in series, so that a first end of the fifth switch (33) is connected to the second intermediate point (P2), a second end of the fifth switch (33) is connected to a first end of the sixth switch (34), a second end of the sixth switch (34) is connected to a first end of the seventh switch (35), and a second end of the seventh switch (35) is connected to the output terminal (15), and
- the fourth supply line (27) comprising an eighth switch, the sixth and seventh switches (36, 34, 35) connected in series so that a first end of the eighth switch (36) is connected to the fourth input connection (23), a second end of the eighth switch (36) is connected to the first end of the sixth switch (34).

5. Multilevel inverter according to claim 4, wherein the second end of the first capacitor (C1) is connected to the positive input terminal (13) and the second end of the third capacitor (C3) is connected to the negative input terminal (14), the multilevel power inverter being a four-level inverter.

6. Multilevel inverter according to claim 4 or 5, further comprising a plurality of balancing resistors, a first balancing resistor connecting the first and the second ends of the first switch (29), a second balancing resistor connecting the first and the second ends of the second switch (30), a third balancing resistor connecting the first and the second ends of the third switch (31), a fourth balancing resistor connecting the first and the second ends of the sixth switch (34), a fifth balancing resistor connecting the first and the second ends of the seventh switch (35), and a sixth balancing resistor connecting the first and the second ends of the eighth switch (36).

7. Multilevel inverter according to any one of claims 3 to 6, wherein each switch (29, 30, 31, 32, 33, 34, 35, 36, 57, 58, 59, 60, 61, 62, 63, 64, 65, 66, 67, 68, 69, 70, 71, 72, 75, 76, 105, 106, 107, 108, 109, 110, 111, 112, 113, 114, 115, 116) comprises a unidirectional switch including at least a diode (40) and at least a gate turn off thyristor (42), the anode of the gate turn off thyristor being connected to the cathode of the diode and the cathode of the a gate turn off thyristor being connected to the anode of the diode, the gate of the gate turn off thyristor being connected to the command circuit.

8. Multilevel inverter according to any one of claims 3 to 6, wherein each switch (29, 30, 31, 32, 33, 34, 35, 36, 57, 58, 59, 60, 61, 62, 63, 64, 65, 66, 67, 68, 69, 70, 71, 72, 75, 76, 105, 106, 107, 108, 109, 110, 111, 112, 113, 114, 115, 116) comprises an unidirectional switch including at least a diode (40) and at least a field effect transistor (41), wherein the drain of the transistor is connected to the cathode of the diode and the source of the transistor is connected to the anode of the diode, the gate of the transistor being connected to the command circuit.

9. Multilevel inverter according to claim 1 or 2, wherein Q is greater or equal than tree, N+1 being further the number of input connections (80, 81, 82, 83, 84, 85, 86, 87, 88) and the number of supply lines, some switches of the module (18) comprising unidirectional switches and bidirectional switches.

10. Multilevel inverter according to any one of claims 1 to 9, wherein the balancing device (17) comprises two switching modules and an inductor, each input connection (20, 21, 22, 23) of the two switching modules of the balancing device being connected to one of the two input terminals or to one of the intermediate points, the output terminal (15) of each switching module of the balancing device being connected to an end of the inductor.

11. Method for controlling a multilevel inverter (10) converting a DC voltage into an AC voltage or an AC voltage into a DC voltage including at least one phase (P), the multilevel inverter comprising:
- a positive input terminal (13), a negative input terminal (14), and an output terminal (15) for the at least one phase;
- a set (16) of capacitors including N capacitors (C1, C2, C3, C10, C11, C12, C13, C14, C15, C16, C20, C21, C22, C23, C24, C25, C26, C27) connected in series between both input terminals and connected together through intermediate points (P1, P2, P10, P11, P12, P13, P14, P15, P20, P21, P22, P23, P24, P25, P26), two extreme capacitors of the N capacitors being directly connected to one of the two input terminals, N being an integer so that N=Qⁿ⁺¹-1, Q being an integer equal or greater than two, and n being an integer equal or greater than or to 1;
- the inverter having N+1 levels,
- a balancing device (17) connected between both input terminals and the intermediate points, and configured to balance the voltage on the terminals of each of the capacitors of the set of capacitors regardless of the DC voltage and the current delivered on the positive and negative input terminals and regardless of the AC voltage and current delivered by the phase,
- for the output terminal (15), a module (18) for switching the DC voltage and being able to convert the DC voltage on the positive and negative input terminals into AC voltage on the output terminal, or for switching the AC voltage on the output terminal and being able to convert the AC voltage into the DC voltage on the positive and negative input terminals , each switching module comprising:
∘ input connections (20, 21, 22, 23, 45, 46, 47, 48, 49, 50, 51, 52, 80, 81, 82, 83, 84, 85, 86, 87, 88), each input connection being connected to one of the two input terminals, or to one of the intermediate points, and
o supply lines (24, 25, 26, 27), each supply lines connecting an input connection to the output terminal and comprising a plurality of switches connected together in series,
**characterized in that** the method comprises controlling a set of switches (30, 31, 59, 61, 75, 114) of the plurality of switches of a first supply line (24) connected to a first input connection (20, 45, 80) shared with a second supply line (25) connected to a second input connection (21, 46, 81) so that a first current flowing from the first input connection to the respective output terminal and a second current flowing from the second input connection to the respective output terminal flow through the set of switches of the plurality of switches.

12. Method according to claim 11, wherein Q is equal to two, N+1 being further the number of input connections (20, 21, 22, 23, 45, 46, 47, 48, 49, 50, 51, 52) and the number of supply lines (24, 25, 26, 27), each switching module (18) comprising log(N+1)/log(2)*(N+1) switches, each supply lines comprising N switches..

13. Method according to claim 12, wherein n is equal to one so that N is equal to three, the set of capacitors including a first, a second and a third capacitors (C1, C2, C3), a first end of the first capacitor (C1) being connected to a first end of the second capacitor (C2) through a first intermediate point (P1), a first end of the third capacitor (C3) being connected to the second capacitor (C2) through a second intermediate point (P2), the first input connection (20) being connected to the second end of the first capacitor (C1), the second input connection (21) being connected to the first intermediate point (P1), a third input connection (22) of a third supply line (26) being connected to the second intermediate point (P2), and a fourth input connection (23) of a fourth supply line (27) being connected to the second end of the third capacitor (C3), the first supply line comprising a first, second and a third switches (29, 30, 31), the second supply line comprising a fourth switch, the second and the third switches (32, 30, 31), the third supply line (26) comprising a fifth switch, a sixth switch and a seventh switch (33, 34, 35), and the fourth supply line (27) comprising a eighth switch, the sixth and seventh switches (36, 34, 35), the method comprising:
- closing the fourth, sixth, seventh and eight switches (32, 34, 35, 36) and opening the first, second, third and fifth switches (29, 30, 31, 33) to deliver a first level on the output terminal,
- closing the fourth, fifth, sixth and seventh switches and opening the first, second, third and eighth switches to deliver a second level on the output terminal,
- closing the second, third, fourth and fifth switches, and opening the first, sixth, seventh and eighth switches to deliver a third level on the output terminal, and
- closing the first, second, third and fifth switches, and opening the fourth, sixth, seventh and eighth switches to deliver a fourth level on the output terminal.

14. Method according to claim 13, further comprising:
- opening the eighth switch (36) to switch from the first level to the second level,
- opening the sixth and seven switches (34, 35) to switch from the second level to the third level, and
- opening the first switch (29) to switch from the third level to the fourth level.

15. Method according to claim 13 or 14, wherein the second end of the first capacitor (C1) is connected to the positive input terminal (13) and the second end of the third capacitor (C3) is connected to the negative input terminal (14), the multilevel power inverter being a four level power inverter.
